# EUROPEAN PATENT APPLICATION

(11) **EP 3 919 605 A1**
(43) Date of publication of application: **08.12.2021**
(21) Application number: 19718772.7
(22) Date of filing: 28.01.2019
(51) Int. Cl.: C12G 3/025, C12H 3/04

(54) **METHOD AND APPARATUS FOR REDUCING THE ALCOHOL CONTENT OF AN ALCOHOLIC BEVERAGE**

(71) Applicant: ALACARTE VENTURES, S.L., 17538 El Vilar-Fontanals de Cerdanya (ES)
(72) Inventor: BARANDIARAN SARDINE, Aleix, 08500 Vic (ES); CASTELLS ESQUE, Pere, 08789 La Torre de Claramunt (ES); GAMEZ PICON, Jordi, 08195 Sant Cugat del Valles (ES)
(74) Representative: Igartua, Ismael
(86) International application number: PCT/ES2019/070037
(87) International publication number: WO 2020/157342

(57) **Abstract**

Apparatus for reducing the alcohol content of an alcoholic beverage (10), said apparatus comprising a primary circuit (11) through which the alcoholic beverage (10) circulates, a secondary circuit (21) through which an alcohol extracting liquid (20) circulates, and at least one filter (30) with a gas-permeable hydrophobic membrane, the filter (30) being configured so that one of the sides of the membrane is in contact with the alcoholic beverage (10) circulating through the primary circuit (11) and so that the other side of the membrane is in contact with the alcohol extracting liquid (20) circulating through the secondary circuit (21). The apparatus further comprises an extraction and filling circuit (40) configured for guiding the alcoholic beverage (10) from a container (1) to the primary circuit (11) and for guiding said alcoholic beverage (10), once its alcohol content has been reduced, from the primary circuit (11) to the container (1).

## Description

### TECHNICAL FIELD

The present invention relates to methods and apparatus for reducing the alcohol content of an alcoholic beverage.

### PRIOR ART

Methods and apparatus for reducing the alcohol content of an alcoholic beverage are known. WO1993022036A1 describes a process for reducing the alcohol content of an aqueous mixture. To that end, the process comprises a first step in which a surface of a microporous hydrophobic membrane comes into contact with the aqueous mixture. In a second step, the other surface of the microporous hydrophobic membrane comes into contact with water or with a saline solution dissolved in water. In a third step, the aqueous mixture is collected. During the process, the alcohol of the aqueous mixture evaporates, goes through the membrane, and is dissolved in the water or in the saline solution dissolved in water, giving rise to an aqueous mixture the alcohol content of which is reduced.

### DISCLOSURE OF THE INVENTION

The object of the invention is to provide an apparatus and a method for reducing the alcohol content of an alcoholic beverage, as defined in the claims.

The apparatus for reducing the alcohol content of an alcoholic beverage of the invention comprises a primary circuit through which the alcoholic beverage circulates, a secondary circuit through which an alcohol extracting liquid circulates, a pump configured for circulating the alcoholic beverage through the primary circuit, and a pump configured for circulating the alcohol extracting liquid through the secondary circuit. The apparatus also comprises a filter comprising at least one gas-permeable hydrophobic membrane, the filter being configured so that one of the sides of the membrane is in contact with the alcoholic beverage circulating through the primary circuit and so that the other side of the membrane is in contact with the alcohol extracting liquid circulating through the secondary circuit.

The apparatus of the invention further comprises an extraction and filling circuit configured for guiding the alcoholic beverage from a container to the primary circuit and for guiding said alcoholic beverage, once its alcohol content has been reduced, from the primary circuit to the container.

The method of the invention comprises a step of extracting alcohol from the alcoholic beverage by means of recirculating the alcoholic beverage in a primary circuit and recirculating an alcohol extracting liquid in a secondary circuit, bringing one side of a gas-permeable hydrophobic membrane into contact with the alcoholic beverage and the other side of the membrane into contact with the alcohol extracting liquid.

Before the step of extracting alcohol, the method of the invention comprises a step of extracting the alcoholic beverage from a container through an extraction and filling circuit in fluid communication with the primary circuit. In said step of extracting the alcoholic beverage, the alcoholic beverage is extracted from the container and introduced into the primary circuit. After the step of extracting alcohol, the method comprises a step of filling the container, in which the alcoholic beverage with a reduced alcohol content is extracted from the primary circuit and introduced into the container through the extraction and filling circuit.

With the apparatus and the method of the invention, the alcohol content of an alcoholic beverage housed in a container can be reduced directly from the container, given that the apparatus itself extracts the alcoholic beverage from the container and then later fills it with the alcoholic beverage, once the alcohol content thereof has been reduced. As a result, the apparatus and the method of the invention are suitable for use in hostelry, given that the alcohol content can be reduced *in situ,* right in front of the customer, for example a diner in a restaurant, the alcoholic beverage being directly extracted from a bottle or other container into the apparatus of the invention, and the bottle or container being filled directly from the apparatus of the invention once the alcohol content has been reduced.

These and other advantages and features of the invention will become apparent in view of the drawings and detailed description of the invention.

### DESCRIPTION OF THE DRAWINGS

Figure 1 shows a schematic depiction of an embodiment of the apparatus of the invention, in which the alcoholic beverage is circulating through the primary circuit and the alcohol extracting liquid is circulating through the secondary circuit.
Figure 2 shows a schematic depiction of the embodiment of Figure 1, in which the alcoholic beverage is being extracted from the container and is being introduced into the primary circuit.
Figure 3 shows a schematic depiction of the embodiment of Figure 1, in which the alcoholic beverage with a reduced alcohol content is being extracted from the primary circuit and is being introduced into the container.
Figure 4 shows a schematic depiction of the embodiment of Figure 1, once the alcoholic beverage has been extracted from the primary circuit.
Figure 5 shows a schematic depiction of the embodiment of Figure 1, once the alcoholic beverage has been extracted from the primary circuit.
Figure 6 shows a schematic depiction of the embodiment of Figure 1, in which the alcohol extracting liquid is being bypassed from the secondary circuit to the primary circuit.
Figure 7 shows a schematic depiction of the embodiment of Figure 1, in which the alcohol extracting liquid is circulating through the primary circuit.
Figure 8 shows a schematic depiction of the embodiment of Figure 1, in which the alcohol extracting liquid is being extracted from the primary circuit.
Figure 9 shows a schematic depiction of the embodiment of Figure 1, in which the alcohol extracting liquid is being extracted from the primary circuit.
Figure 10 shows a schematic depiction of the embodiment of Figure 1, once the alcohol extracting liquid has been extracted from the primary circuit.
Figure 11 shows a schematic depiction of the embodiment of Figure 1, once the alcohol extracting liquid has been extracted from the primary circuit.
Figure 12 shows a schematic depiction of the head of the embodiment of Figure 1, in which the alcoholic beverage is being extracted from the container.
Figure 13 shows a schematic depiction of the head of Figure 12, in which the container is being filled.

### DETAILED DISCLOSURE DETAILED OF THE INVENTION

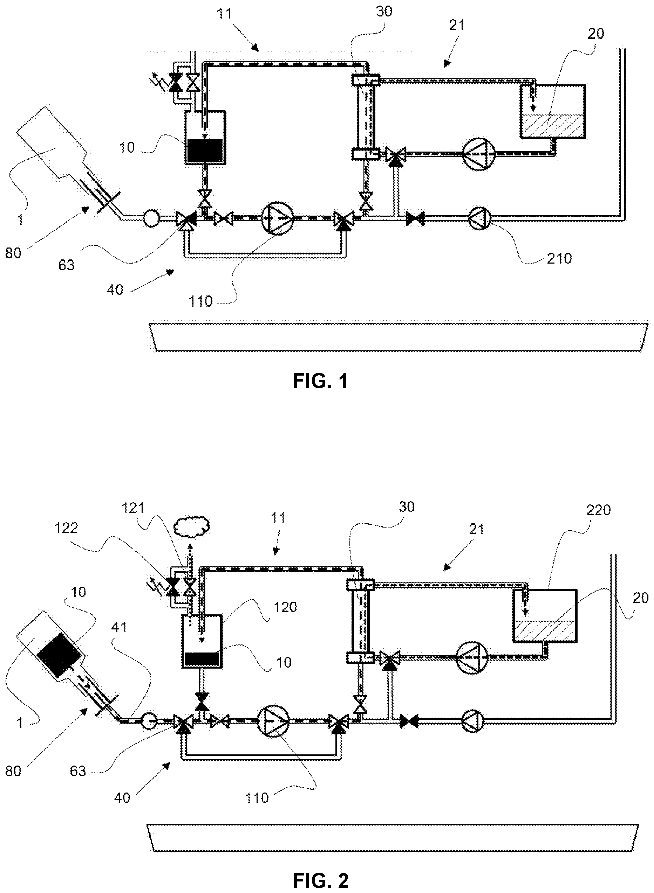

As shown in Figures 1 to 11, the apparatus of the invention comprises a primary circuit 11 through which an alcoholic beverage 10 circulates, a secondary circuit 21 through which an alcohol extracting liquid 20 circulates, a pump 110 configured for circulating the alcoholic beverage 10 through the primary circuit 11, and a pump 210 configured for circulating the alcohol extracting liquid 20 through the secondary circuit 21. The apparatus also comprises a filter 30 comprising at least one gas-permeable hydrophobic membrane, configured so that one of the sides of the membrane enters into contact with the alcoholic beverage 10 circulating through the primary circuit 11 and so that the other side of the membrane is in contact with the alcohol extracting liquid 20 circulating through the secondary circuit 21. Thus, the alcoholic beverage 10 circulating through the primary circuit 11 is not in direct contact with the alcohol extracting liquid 20 circulating through the secondary circuit 21.

The apparatus of the invention comprises an extraction and filling circuit 40 configured for guiding the alcoholic beverage 10 from a container 1 to the primary circuit 11 and for guiding said alcoholic beverage 10, once its alcohol content has been reduced, from the primary circuit 11 to the container 1.

The container 1 from which the alcoholic beverage 10 is extracted so as to subsequently reduce its alcohol content can be a bottle, a glass, or any container configured for being able to house a liquid. The apparatus of the invention allows reducing the alcohol content of the alcoholic beverage 10 housed in the container 1 directly, given that through the extraction and filling circuit 40, the apparatus can extract the alcoholic beverage 10 from the container 1, and later fill the container 1 with the alcoholic beverage 10, once the alcohol content thereof has been reduced. The apparatus thereby allows reducing the alcohol content *in situ,* the alcoholic beverage being extracted directly from a bottle or another container into the apparatus of the invention, and the bottle or container being filled directly from the apparatus of the invention once the alcohol content has been reduced. This renders the apparatus of the invention suitable for use in the hostelry, given that it allows reducing the alcohol content of the alcoholic beverage 10 housed in the container 1 right in front of the customer, therefore assuring that the beverage with a reduced alcohol content that the customer is going to consume is the alcoholic beverage from the bottle selected by said customer.

The alcoholic beverage can be red, white, or rose wine, although it could be another type of wine, or another type of alcoholic beverage such as brandy, cognac, or any type of liquor. The alcohol extracting liquid can be water, both bottled mineral water and tap water, or water to which volatile elements have been added prior to being used by the apparatus of the invention, so that the volatile elements existing in the alcoholic beverage remain in the alcoholic beverage and are not transferred to the alcohol extracting liquid.

The pump 110 of the primary circuit 11 and the pump 210 of the secondary circuit 21 are preferably hydraulic pumps.

Figures 1 to 11 show a schematic depiction of an embodiment of the apparatus of the invention in the different phases of the process of reduction of alcohol. In Figure 1, the alcoholic beverage 10 is circulating through the primary circuit 11 by the action of the pump 110 of the primary circuit 11, and the alcohol extracting liquid 20 is circulating through the secondary circuit 21 by the action of the pump 210 of the secondary circuit 21. Both circuits, the primary circuit 11 and the secondary circuit 21, go through the filter 30 which comprises at least one membrane, such that the alcoholic beverage 10 circulating through the primary circuit 11 comes into contact with one side of the membrane, and the alcohol extracting liquid 20 circulating through the secondary circuit 21 comes into contact with the other side of the membrane. Given that the membrane is hydrophobic and gas-permeable, when it is in contact with the alcoholic beverage 10 on one side and with the alcohol extracting liquid 20 on the other side, it allows the alcohol of the alcoholic beverage 10 to go through the membrane, being transferred from the alcoholic beverage 10 to the alcohol extracting liquid 20, thereby reducing the alcohol content of the alcoholic beverage 10 and accordingly increasing the alcohol content of the alcohol extracting liquid 20. The more times the alcoholic beverage 10 recirculates in the primary circuit 11 and the alcohol extracting liquid 20 in the secondary circuit 21, the more alcohol will go through the membrane, such that the amount of alcohol of the alcoholic beverage 10 will be reduced further.

The pump 110 of the primary circuit 11 determines the flow rate of the alcoholic beverage 10 in the primary circuit 11. In a preferred embodiment of the apparatus of the invention, the flow rate of the alcoholic beverage 10 in the primary circuit 11 and the flow rate of the alcohol extracting liquid 20 in the secondary circuit 21 are in a range between 1.2 I/min and 3.8 l/min.

Figure 1 likewise shows the extraction and filling circuit 40, which is in fluid communication with both the container 1 and the primary circuit 11, and through which the apparatus extracts the alcoholic beverage 10 from the container 1 and guides it to the primary circuit 11, and then fills the container 1 with the alcoholic beverage 10 coming from the primary circuit 11, once the alcohol content thereof has been reduced.

The extraction and filling circuit 40 of the apparatus of the invention preferably comprises an extraction branch 41 configured for providing fluid communication between the container 1 and the primary circuit 11. The extraction branch 41 is communicated with the primary circuit 11 through an inlet valve 63 which is arranged before the pump 110 of the primary circuit 11. The pump 110 of the primary circuit 11 is configured for extracting the alcoholic beverage 10 from the container 1 when the inlet valve 63 is in an extraction position, allowing the alcoholic beverage 10 to flow from the container 1 to the primary circuit 11.

In Figure 2, the alcoholic beverage 10 is being extracted from the container 1 and is being introduced into the primary circuit 11. For this to be possible, the inlet valve 63 must be in the extraction position, must be positioned before the pump 110 of the primary circuit 11, and said pump 110 must be in operation. As shown in Figure 2, when the inlet valve 63 is in the extraction position, it has a first port communicating with the container 1 through the extraction branch 41 open, said first port acting as an inlet, and it has a second port communicating with the primary circuit 11 open, said second port acting as an outlet. When the pump 110 of the primary circuit 11 is in operation and the inlet valve 63 is in the extraction position, the pump 110 creates a negative pressure in the container 1 which allows extracting the alcoholic beverage 10 of the container 1 and introducing it into the primary circuit 11 through the extraction branch 41. Therefore, the pump 110 of the primary circuit 11 has a dual function: on one hand, it recirculates the alcoholic beverage 10 in the primary circuit 11, and on the other hand, it introduces the alcoholic beverage 10 into the primary circuit 11 from the container 1.

Once all the alcoholic beverage 10 has been extracted from the container 1 and introduced into the primary circuit 11, the position of the inlet valve 63 must be changed, closing the second port of the inlet valve 63 communicating with the primary circuit 11, thereby preventing the alcoholic beverage 10 from being able to exit the primary circuit 11 through the inlet valve 63. The inlet valve 63 will be kept in this position as long as the alcoholic beverage 10 is recirculating through the primary circuit 11, as shown in Figure 1.

The extraction and filling circuit 40 of the apparatus of the invention preferably comprises a filling branch 42 configured for providing fluid communication between the primary circuit 11 and the container 1, the filling branch 42 being communicated with the primary circuit 11 through an outlet valve 64 which is arranged after the pump 110 of the primary circuit 11. In addition to recirculating the alcoholic beverage 10 and introducing the alcoholic beverage 10 into the primary circuit 11, the pump 110 of the primary circuit 11 also extracts the alcoholic beverage 10 with a reduced alcohol content from the primary circuit 11 into the container 1 through the filling branch 42 when the outlet valve 64 is in a filling position.

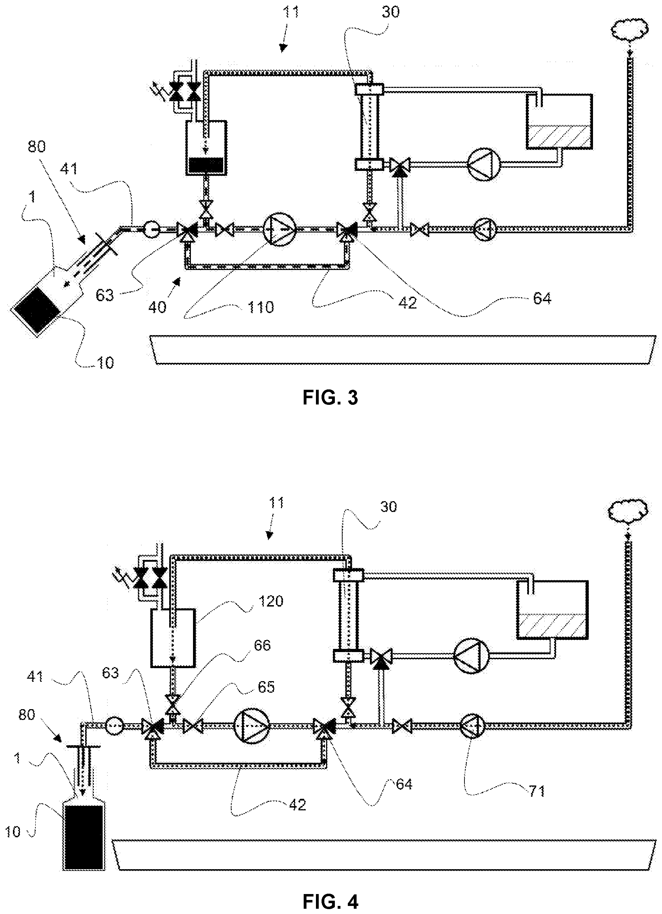

In Figure 3, the alcoholic beverage 10 with a reduced alcohol content is being extracted from the primary circuit 11 and introduced into the container 1. For this to be possible, the outlet valve 64 must be in the filling position, must be arranged after the pump 110 of the primary circuit 11, and said pump 110 must be in operation. As shown in Figure 3, when the outlet valve 64 is in the filling position, it has a first port communicating with the pump 110 of the primary circuit 11 open, said first port acting as an inlet, and it has a second port communicating with the container 1 through the filling branch 42 open, said second port acting as an outlet.

The outlet valve 64 is preferably a three-way valve, and in the filling position, the outlet valve 64 has a third port communicating with the filter 30 of the primary circuit 11 closed, thereby preventing the alcoholic beverage 10 from recirculating through the primary circuit 11. When the pump 110 of the primary circuit 11 is in operation and the outlet valve 64 is in the filling position, the alcoholic beverage 10 with a reduced alcohol content is extracted from the primary circuit 11 and introduced into the container 1 through the filling branch 42 by the action of said pump 110.

The filling branch 42 of the apparatus of the invention is in fluid communication with the extraction branch 41 such that the alcoholic beverage 10 with a reduced alcohol content of the primary circuit 11 reaches the container 1 through the extraction branch 41.

The inlet valve 63 of the apparatus of the invention is also preferably a three-way valve, the filling branch 42 being communicated with the extraction branch 41 through said inlet valve 63. As described above and seen in Figure 3, a first port of the inlet valve 63 communicates with the container 1 through the extraction branch 41 and a second port communicates with the primary circuit 11. The inlet valve 63 further comprises a third port providing fluid communication between the filling branch 42 and the extraction branch 41. As a result and as shown in Figure 3, when the pump 110 of the primary circuit 11 is in operation, the outlet valve 64 is in the filling position, and the inlet valve 63 has the third port providing fluid communication between the filling branch 42 and the extraction branch 41 open, the third port acting as an inlet; it furthermore has the first port communicating with the container 1 through the extraction branch 41 open, the first port acting as an outlet; and it has the second port communicating with the primary circuit 11 closed; the alcoholic beverage 10 with a reduced alcohol content reaches the container 1 from the primary circuit 11 through the extraction branch 41.

The filter 30 preferably comprises more than one gas-permeable hydrophobic membrane, such that one of the sides of the membranes comes into contact with the alcoholic beverage 10 circulating through the primary circuit 11 and the other side of said membranes comes into contact with the alcohol extracting liquid 20 circulating through the secondary circuit 21, where the membranes can be arranged in a series configuration, parallel configuration, or in any combination of series and parallel configurations.

In a preferred embodiment, the apparatus of the invention comprises two membranes arranged in a parallel configuration. In said embodiment, about 3 minutes would be required to reduce the amount of alcohol of the alcoholic beverage by 20%, about 5 minutes would be required to reduce the amount of alcohol of the alcoholic beverage by 40%, about 9 minutes would be required to reduce it by 50%, and about 12 minutes would be required to reduce it by 60%.

The apparatus of the invention preferably comprises an air pump 71 and air guiding means configured for guiding the air generated by the air pump 71 to the primary circuit 11 during the extraction of the alcoholic beverage 10 with a reduced alcohol content from the primary circuit 11 into the container 1.

Once the alcoholic beverage 10 has recirculated in the primary circuit 11 the time required for its alcohol content to have been reduced by the desired amount or, in other words, the desired percentage, the apparatus introduces the alcoholic beverage 10 into the container 1. To that end, as shown in Figure 3 and as described above, the pump 110 of the primary circuit 11 must be in operation, the outlet valve 64 in the filling position, and the inlet valve 63 must have the third port providing fluid communication between the filling branch 42 and the extraction branch 41 open, the first port communicating with the container 1 through the extraction branch 41 open, and the second port communicating with the primary circuit 11 closed, so that the alcoholic beverage 10 with a reduced alcohol content of the primary circuit 11 reaches the container 1 through the extraction branch 41. However, in this process it is likely that residues of the alcoholic beverage 10 remain in the primary circuit 11, in the membrane or membranes, in the extraction branch 41, and in the filling branch 42. To facilitate the extraction of the alcoholic beverage 10 from the primary circuit 11 in its entirety, preventing residues of the alcoholic beverage 10 from being left behind in the apparatus, the air pump 71 is activated during the extraction of the alcoholic beverage 10 from the primary circuit 11. The air that said pump 71 introduces into the apparatus of the invention is guided to the primary circuit 11 by means of air guiding means.

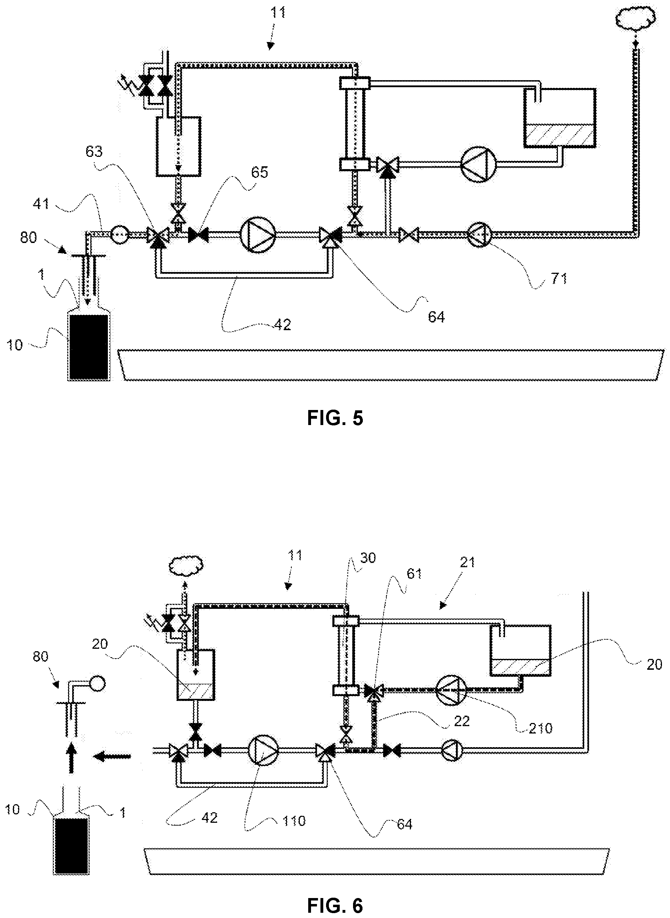

In Figure 4, the alcoholic beverage 10 has now been extracted from the primary circuit 11. In that moment, the air introduced into the apparatus runs through the primary circuit 11 and exits into the container 1 through the filling branch 42 and extraction branch 41, extracting along its way any residue of the alcoholic beverage 10 into the container 1. Once the alcoholic beverage 10 has been extracted, the apparatus changes the position of the inlet valve 63 to the extraction position, so that the air introduced into the primary circuit 11 exits into the container 1 directly through the extraction branch 41, without going through the filling branch 42, as can be seen in Figure 5. The apparatus preferably comprises a two-way valve 65 arranged after the inlet valve 63 and before the pump 110 of the primary circuit 11. The two-way valve 65 is usually open, allowing the recirculation of alcoholic beverage 10 in the primary circuit 11, the entrance of alcoholic beverage 10 in the primary circuit 11 from the container 1, and the passage of air or of alcoholic beverage 10 from the primary circuit 11 to the filling branch 42. However, as shown in Figure 5, in this situation in which the air is to be extracted from the primary circuit 11 into the container 1 directly through the extraction branch 41, without going through the filling branch 42, the valve 65 has been closed by the apparatus, thereby preventing the air from continuing to circulate through the primary circuit 11, and therefore coming out of the primary circuit 11 through the extraction branch 41.

The apparatus of the invention preferably comprises guiding means configured for guiding the alcohol extracting liquid 20 from the secondary circuit 21 to the primary circuit 11 once the alcoholic beverage 10 has been extracted from the primary circuit 11. Once the amount of alcohol of the alcoholic beverage 10 has been reduced in the apparatus of the invention, i.e., once a dealcoholization process has taken place, the alcoholic beverage 10 is extracted into the container 1, and it is advisable to perform a cleaning process for cleaning the primary circuit 11 before the following dealcoholization process. The cleaning process prevents the odor and taste of the alcoholic beverage with a reduced alcohol content in a dealcoholization process from being affected by the alcoholic beverage of the previous dealcoholization process. Likewise, it also prevents the color of the alcoholic beverage with a reduced alcohol content in a dealcoholization process from being affected by the alcoholic beverage of the previous dealcoholization process, such that the color of a white wine the alcohol content of which is being reduced in a dealcoholization process, is not affected by the previous dealcoholization of a red wine, for example, in the previous dealcoholization process.

However, preferably the apparatus of the invention is also configured for using the alcohol extracting liquid 20 for cleaning the primary circuit 11. Thus, the cleaning process can be carried out as long as the user arranges a new container 1 with alcoholic beverage 10 in the apparatus of the invention for a new dealcoholization process, which makes it possible for the time required to dealcoholize the alcoholic beverage of several containers in a successive manner to decrease, in the event of a cleaning process being required between two successive dealcoholization processes.

The guiding means configured for guiding the alcohol extracting liquid 20 from the secondary circuit 21 to the primary circuit 11 of the apparatus of the invention preferably comprise a bypass branch 22 in fluid communication with the primary circuit 11 and with the secondary circuit 21.

The outlet valve 64 of the apparatus of the invention is a three-way valve, the bypass branch 22 being communicated with the primary circuit 11 through said outlet valve 64.

The guiding means configured for guiding the alcohol extracting liquid 20 from the secondary circuit 21 to the primary circuit 11 of the apparatus of the invention preferably comprise a bypass valve 61 providing fluid communication between the secondary circuit 21 and the bypass branch 22.

In Figure 6, the alcohol extracting liquid 20 is being bypassed from the secondary circuit 21 to the primary circuit 11 through the bypass branch 22. The bypass branch 22 is in fluid communication with the primary circuit 11 through the outlet valve 64, and with the secondary circuit 21 through the bypass valve 61.

The bypass valve 61 is a three-way valve, such that a first port communicates with the pump 210 of the secondary circuit 21, a second port communicates with the filter 30, and a third port communicates with the bypass branch 22. As shown in Figure 6, when the apparatus of the invention is bypassing the alcohol extracting liquid 20 from the secondary circuit 21 to the primary circuit 11, the bypass valve 61 has the first port open, the second port closed, and the third port open, such that the alcohol extracting liquid 20 is bypassed from the secondary circuit 21 to the bypass branch 22.

In order for the alcohol extracting liquid 20 to enter the primary circuit 11, it is necessary for the outlet valve 64 to have the third port, which is the port communicating with the filter 30 of the primary circuit 11, closed such that it allows the alcohol extracting liquid 20 coming from the secondary circuit 21 it be directed to the filter 30, at the same time preventing the alcohol extracting liquid 20 from being directed to the pump 110 of the primary circuit 11 or to the filling branch 42. Furthermore, it is necessary for the pump 210 of the secondary circuit 21 to be in operation so that the apparatus of the invention can direct the alcohol extracting liquid 20 to the primary circuit 11.

Once the alcohol extracting liquid 20, or a sufficient amount of alcohol extracting liquid 20 has been bypassed to the primary circuit 11, the apparatus closes the third port of the bypass valve 61, thereby preventing the alcohol extracting liquid 20 from being bypassed from the secondary circuit 21 to the primary circuit 11, and opens the second port of the bypass valve 61, thereby allowing the alcohol extracting liquid 20 to be directed to the filter 30. During the process for cleaning the primary circuit 11, it is not necessary for the alcohol extracting liquid 20 to recirculate in the secondary circuit 21, so the pump 210 of the secondary circuit 21 could be shut off.

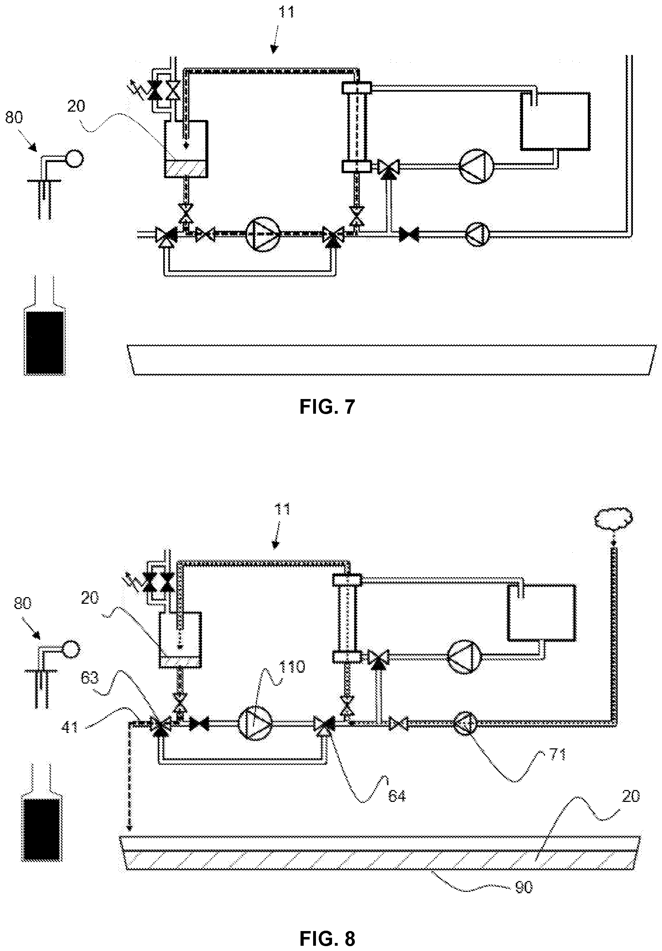

In Figure 7 is shown the embodiment of the apparatus of the invention during the cleaning process. During said cleaning process, the alcohol extracting liquid 20 recirculates in the primary circuit 11, cleaning possible residues of alcoholic beverage 10 with a reduced alcohol content in the previous dealcoholization process out of said primary circuit 11. The position of the valves in fluid communication with the primary circuit 11 is the same during the cleaning process as during the dealcoholization process.

The apparatus of the invention preferably comprises a drain chamber 90 for draining the alcohol extracting liquid 20 from the primary circuit 11, such that when the process for cleaning the primary circuit 11 has ended, the apparatus extracts the alcohol extracting liquid 20 from the primary circuit 11 into the drain chamber 90. To that end, the apparatus shuts off the pump 110 of the primary circuit 11, changes the position of the inlet valve 63 to an extraction position, and closes the valve 65, thereby allowing the alcohol extracting liquid 20 to fall into the drain chamber 90 through the extraction branch 41 due to the effect of gravity. To accelerate the process, the apparatus activates the air pump 71 and changes the position of the outlet valve 64 to the filling position so that it allows the entry of air into the primary circuit 11, as shown in Figure 8.

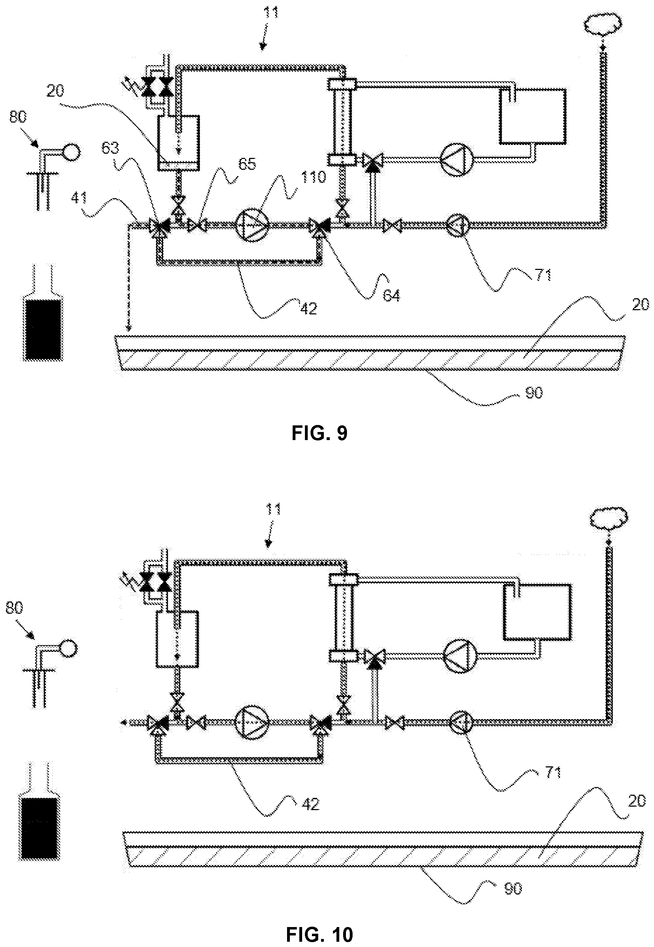

Once part of the alcohol extracting liquid 20 has been extracted through the extraction branch 41, while along its way cleaning away the residues of alcoholic beverage 10 that may have been left in said extraction branch 41 during the extraction of the alcoholic beverage 10 with a reduced alcohol content from the primary circuit 11 into the container 1, the positions of the inlet valve 63 and valve 65 are changed so that the remaining part of alcohol extracting liquid 20 is extracted from the primary circuit 11 through the filling branch 42, and the pump 110 of the primary circuit 11 is activated, as shown in Figure 9. The apparatus keeps the air pump 71 activated and the outlet valve 64 in the filling position so that they help to purge the primary circuit 11.

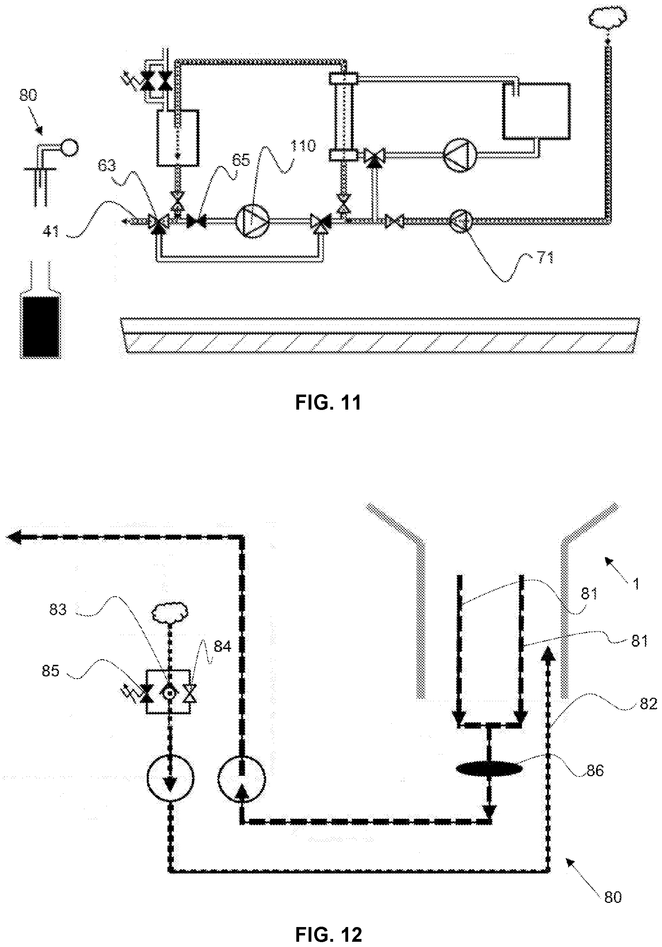

As shown in Figure 10, once all the alcohol extracting liquid 20 has been extracted from the primary circuit 11, the air continues to exit the primary circuit 11 through the filling branch 42, with the purging of possible residues of alcohol extracting liquid 20 of both the primary circuit 11 and the filling branch 42 coming to an end. Finally and as shown in Figure 11, the apparatus shuts off the pump 110 of the primary circuit 11, changes the position of the inlet valve 63 to the extraction position, and closes the valve 65, thereby allowing the air to exit the primary circuit 11 through the extraction branch 41, with the purging of possible residues of alcohol extracting liquid 20 of both the primary circuit 11 and the extraction branch 41 coming to an end.

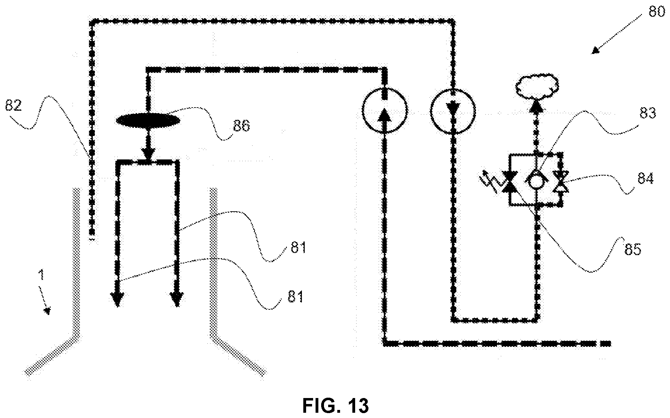

The apparatus of the invention preferably comprises a head 80 in fluid communication with the extraction and filling circuit 40 configured for being coupled to the container 1. Figures 12 and 13 show a schematic depiction of an embodiment of the head 80. The head 80 is coupled to the container 1 before starting the process of extracting the alcoholic beverage 10 from the container 1, and is uncoupled from the container 1 once all the alcoholic beverage 10 with a reduced alcohol content has been introduced into the container 1. The head 80 comprises at least one needle 81 configured for providing fluid communication between the container 1 and the extraction and filling circuit 40. In a preferred embodiment of the apparatus of the invention, the flow rate of the alcoholic beverage 10 in the primary circuit 11 during the extraction of the alcoholic beverage 10 from the container 1, and then during the introduction thereof into the container 1 is between 1.2 I/min and 1.6 l/min.

The head 80 preferably comprises at least a second needle 82 configured for providing fluid communication between the container 1 and the air outside the container 1 to allow the entry or exit of air. The head 80 is preferably configured for being adapted to a closed container 1, for example, a bottle closed by means of a cork. When the head 80 is coupled to the bottle closed by means of a cork, the needles 81 and 82 go through the cork, with part of needle 81 and part of needle 82 thereby being housed inside said bottle. When the alcoholic beverage 10 is extracted from the bottle through the needle 81, the air outside the bottle will be introduced therein through the second needle 82, as shown in Figure 12. Likewise, when the alcoholic beverage 10 with a reduced alcohol content is introduced into the bottle, the air housed therein will exit the bottle through the second needle 82, as shown in Figure 13.

Alternatively, the head 80 can be configured for sealing the container 1. Therefore, in the event that the alcoholic beverage 10 is housed in a container 1 which is not sealed, for example, a bottle without a cork or stopper, the head 80 allows the sealing of the container 1, with the operation thereof being similar to that explained in the case of coupling the head 80 to a closed container 1, such as a bottle closed by means of a cork. In this case, as the head is not required to go through a cork, for example, since it is coupled to the container, the head could dispense with the needles 81 and 82 and comprise a first tube configured for providing fluid communication between the container 1 and the extraction and filling circuit 40, and a second tube configured for providing fluid communication between the container 1 and the air outside the container 1 to allow the entry or exit of air. Like the second needle 82, the second tube would be in fluid communication with the air outside the container 1 through at least one non-return valve 83 and/or through at least one exhaust valve 84, and/or through at least one pressure relief valve 85.

Preferably the second needle 82 is in fluid communication with the air outside the container 1 through at least one non-return valve 83, as shown in Figure 12. Therefore, when the alcoholic beverage 10 is extracted from the container 1 through the needle 81, the air outside the container 1 is introduced into said container 1 through the second needle 82, the non-return valve 83 preventing the air that has entered the container 1 or the alcoholic beverage of the container 1 from exiting the same.

Preferably the second needle 82 is in fluid communication with the air outside the container 1 through at least one exhaust valve 84. Therefore, when the alcoholic beverage 10 with a reduced alcohol content is introduced into the container 1, the apparatus opens the exhaust valve 84, such that the air housed in the container 1 exits the container 1 through said exhaust valve 84, as shown in Figure 13.

Preferably the second needle 82 is in fluid communication with the air outside the container 1 through at least one pressure relief valve 85. Therefore, in the event that the exhaust valve 84 was to fail, the air would escape from inside the container 1 through the pressure relief valve 85. At a given time, even an excess of alcoholic beverage 10 could escape from the container 1 through the pressure relief valve 85.

The head 80 preferably comprises a sulfite extraction filter 86. The alcoholic beverage 10 goes through the sulfite extraction filter 86 both when being extracted from and when being introduced into the container 1.

The apparatus of the invention preferably comprises means 50 configured for tilting the container 1 gradually from an initial vertical position to a maximum tilt position greater than 90°, preferably about 170°. It is thereby assured that the needle 81 is in contact with the alcoholic beverage 10 when the apparatus of the invention starts to extract the alcoholic beverage 10 from the container 1. Furthermore, the container 1 is tilted gradually, such that the alcoholic beverage 10 does not slosh around therein, and its properties are therefore not affected. In a preferred embodiment of the apparatus of the invention the container 1 will be tilted to a maximum tilt position comprised in a range preferably between 120° and 135°.

Preferably, the means 50 configured for tilting the container 1 are also configured for gradually straightening the container 1 up until it recovers its initial vertical position. When the alcoholic beverage 10 with a reduced alcohol content is introduced into the container 1, the apparatus gradually straightens the container 1 up, thereby preventing a sudden falling of the alcoholic beverage 10 with a reduced alcohol content into the container 1, thereby preventing it from being sloshed around when it is introduced into the container 1. In a preferred embodiment of the apparatus of the invention, the means 50 comprise a fixed support on which the container 1 is supported through a rotating shaft fixed to the support, the rotating shaft being coupled to the container 1 by fastening means which rotate with respect to said rotating shaft.

The apparatus of the invention preferably comprises a chamber 120 which the primary circuit 11 goes through, said chamber 120 being configured for temporarily housing the alcoholic beverage 10 circulating through the primary circuit 11. The apparatus preferably comprises a two-way valve 66 arranged after the chamber 120, such that when the valve 66 is closed it prevents the liquid from exiting the chamber 120 to the primary circuit 11. The apparatus of the invention keeps the valve 66 closed when it is extracting the alcoholic beverage 10 from the container 1 into the primary circuit 11 and when it is directing the alcohol extracting liquid 20 from the secondary circuit 21 to the primary circuit 11. However, the apparatus keeps the valve 66 open when the alcoholic beverage 10 is recirculating in the primary circuit 11 during the dealcoholization process, or when the alcohol extracting liquid 20 is recirculating in the primary circuit 11 during the cleaning process. Likewise, the apparatus keeps the valve 66 open when it extracts the alcoholic beverage 10 with a reduced alcohol content from the primary circuit 11 into the container 1, and when it extracts the alcohol extracting liquid 20 from the primary circuit 11 into the drain chamber 90. In a preferred embodiment of the apparatus of the invention, the capacity of the chamber 120 is between 0.5 I and 1.75 I, said capacity preferably being 1 I.

In the apparatus of the invention, the chamber 120 is in fluid communication with the air outside the chamber 120 by means of at least one exhaust valve 121. When the apparatus extracts the alcoholic beverage 10 from the container 1 and introduces it into the primary circuit 11, the alcoholic beverage 10 is stored in the chamber 120, since the outlet from said chamber 120 is closed by means of the valve 66, which is closed, such that the air from the primary circuit 11 and from the chamber 120 escapes out through the exhaust valve 121, which is open.

When the apparatus activates the air pump 71 to facilitate the extraction of the alcoholic beverage 10 with a reduced alcohol content or of the alcohol extracting liquid 20 from the primary circuit 11, the exhaust valve 121 is closed to enable purging possible residues of alcoholic beverage 10 or of alcohol extracting liquid 20 from the primary circuit 11 and the extraction and filling circuit 40. Likewise, once the alcoholic beverage 10 or the alcohol extracting liquid 20 has been extracted in its entirety from the primary circuit 11, the exhaust valve 121 is kept closed to facilitate the complete purging of the circuit.

In the apparatus of the invention, the chamber 120 is in fluid communication with the air outside the chamber 120 by means of at least one pressure relief valve 122. Thus, in the event that the exhaust valve 121 was to fail, the air would escape from inside the primary circuit 11 and the chamber 120 through the pressure relief valve 122.

The apparatus of the invention preferably comprises a chamber 220 which the secondary circuit 21 goes through, said chamber 220 being configured for temporarily housing the alcohol extracting liquid 20 circulating through the secondary circuit 21. The chamber 220 can be a fixed chamber located in the apparatus, such that in order to fill it a jar with the alcohol extracting liquid 20 must be emptied into in said chamber 220, for example. However, the chamber 220 can be an extractable chamber, such that it could be extracted from the apparatus, filled with the alcohol extracting liquid 20, and then placed in the apparatus for use. In another embodiment of the apparatus of the invention, the chamber 220 can be connected to a water tap. In a preferred embodiment of the apparatus of the invention, the capacity of the chamber 220 is between 0.5 I and 3 I, said capacity preferably being 1.75 I.

In a preferred embodiment of the apparatus of the invention, the amount of alcohol extracting liquid 20 is between 0.5 and 3 times the amount of alcoholic beverage 10, the amount of alcohol extracting liquid 20 preferably being twice the amount of alcoholic beverage 10.

Likewise, the apparatus of the invention is configured so that the membranes can ser extracted therefrom in an easy manner. The membranes present the risk of bacteria being generated in them if they get wet. It is therefore advisable to clean them at least once a day when the use of the apparatus comes to an end, and to then extract the membranes from the apparatus to then dry them by means of hot air.

The apparatus of the invention preferably comprises a plurality of primary circuits 11 and a plurality of filters 30, each filter 30 being associated with one of the primary circuits 11. Therefore, the apparatus allows dealcoholizing several alcoholic beverages 10 simultaneously, each of them in its primary circuit 11 and going through its corresponding filter 30.

The apparatus of the invention preferably comprises a plurality of secondary circuits 21, being each secondary circuit 21 associated with one of the filters 30.

The apparatus of the invention is preferably a portable apparatus, which allows the apparatus to be taken to the customer, such that the alcohol content of the alcoholic beverage can be reduced *in situ* in front of the customer.

The apparatus of the invention comprises at least one interface through which the user of the apparatus can enter the operating parameters thereof, and where the apparatus can in turn display indicators about the state of the apparatus. The operating parameters of the apparatus can be, among others: process to be run (dealcoholization, cleaning, or drying of membranes), required dealcoholization time, or percentage or amount of alcohol to be reduced, type of alcoholic beverage, etc. The indicators of the apparatus can represent, among others, the state of the membranes and whether or not they are in placed, battery level, fill level of the chamber 220 for the extracting liquid 20, whether or not the apparatus is in operation and if it is, the process being run, etc. The apparatus can also comprise information storage means in which the operating and control system of the apparatus are stored, and at least one processor configured for running said operating and control system, the processor being communicated with both the interface and the information storage means. The apparatus can be configured for working both with batteries and being connected to the electric current.

The invention also relates to a method for reducing the alcohol content of an alcoholic beverage 10 associated with the apparatus for reducing the alcohol content of an alcoholic beverage of the invention. The method of the invention comprises a step of extracting alcohol from the alcoholic beverage 10 by means of recirculating the alcoholic beverage 10 in the primary circuit 11 and recirculating the alcohol extracting liquid 20 in the secondary circuit 21, bringing one side of a gas-permeable hydrophobic membrane into contact with the alcoholic beverage 10 and the other side of the membrane into contact with the alcohol extracting liquid 20. The method of the invention comprises before the step of extracting alcohol a step of extracting the alcoholic beverage 10 from the container 1 through the extraction and filling circuit 40, in which the alcoholic beverage 10 is extracted from the container 1 and introduced into the primary circuit 11. The method of the invention comprises after the step of extracting alcohol, a step of filling the container 1, in which the alcoholic beverage 10 with a reduced alcohol content is extracted from the primary circuit 11 and introduced into the container 1 through the extraction and filling circuit 40. Therefore, the method can be reproduced *in situ,* rendering the method of the invention suitable for application in the hostelry, given that it allows reducing the alcohol content of the alcoholic beverage 10 housed in the container 1 right in front of the customer.

In the step of filling the container 1 of the method of the invention, the alcoholic beverage 10 is extracted from the primary circuit 11 preferably by means of pressurized air. When the alcoholic beverage 10 is extracted from the primary circuit 11 into the container 1, there are likely to be residues of the alcoholic beverage 10 in the primary circuit 11, in the membrane, and in the extraction and filling circuit 40. To facilitate the extraction of the alcoholic beverage 10 from the primary circuit 11 in its entirety, preventing residues thereof from being left behind, during the extraction of the alcoholic beverage 10 from the primary circuit 11 pressurized air is introduced into the primary circuit 11.

The method of the invention preferably comprises a step of tilting the container 1 before the step of extracting the alcoholic beverage 10 from the container 1, in which the container 1 is gradually tilted from an initial vertical position to a maximum tilt position greater than 90°, preferably about 170°.

The method of the invention preferably comprises a step of straightening the container 1 up during the step of filling the container 1, in which the container 1 is gradually straightened up until it recovers its initial vertical position. Therefore, a sudden falling of the alcoholic beverage 10 with a reduced alcohol content into the container 1 is prevented.

The method of the invention preferably comprises a step of introducing volatile elements into the alcohol extracting liquid 20 before the step of extracting alcohol from the alcoholic beverage 10.

The method of the invention preferably comprises a step of extracting sulfites during the step of extracting the alcoholic beverage from the container 1 and/or during the step of filling the container 1.

The method of the invention preferably comprises a step of cleaning the primary circuit 11 before the step of extracting the alcoholic beverage 10 from the container 1 or after the step of filling the container 1 by means of recirculating a cleaning liquid in the primary circuit 11. When the cleaning liquid is recirculated in the primary circuit 11, the cleaning liquid cleans away from the primary circuit 11 possible residues of alcoholic beverage 10 with a reduced alcohol content left behind in the primary circuit 11 after the extraction of the alcoholic beverage 10 from the container 1 through the extraction and filling circuit 40. The step of cleaning prevents the odor, taste, and color of the alcoholic beverage 10 from which the alcohol is being extracted from being affected by the alcoholic beverage 10 with a reduced alcohol content of the previous step of extracting alcohol. In a preferred embodiment of the method of the invention, the step of cleaning will preferably last between 1 and 2 minutes.

In the method of the invention, the cleaning liquid is preferably the alcohol extracting liquid 20 of the secondary circuit 21.

In the method of the invention, after the step of cleaning the cleaning liquid is extracted from the primary circuit 11 into a drain chamber 90. The cleaning liquid can be extracted from the primary circuit 11 into a drain chamber 90 directly by the action of gravity. However, it can also be extracted by activating the pump 110 of the primary circuit 11. To facilitate extraction, pressurized air can furthermore be introduced into the primary circuit 11.

The method of the invention preferably comprises a step of connecting the head 80 to the container 1 before the step of tilting the container 1, the head 80 being in fluid connection with the extraction and filling circuit 40 and the air outside the container 1.

In the step of extracting alcohol from the alcoholic beverage 10 of the method of the invention, the flow rate of the alcoholic beverage 10 is preferably between 1.2 I/min and 3.8 I/min in the primary circuit 11.

In the method of the invention, the amount of alcohol extracting liquid 20 is between 0.5 and 3 times the amount of alcoholic beverage 10, the amount of alcohol extracting liquid 20 preferably being twice the amount of alcoholic beverage 10.

The method of the invention preferably comprises a step of drying the membranes by means of hot air after the step of cleaning the primary circuit 11. It is not advisable for the membranes to get wet, given that bacteria can be generated therein. For this reason, the method of the invention comprises the step of drying, which is advisably carried out at least once a day, once the membranes have been used. In a preferred embodiment of the method of the invention, the step of drying will last 1 hour preferably, and the drying will be performed at a maximum temperature of 60° preferably.

## Claims

1. Apparatus for reducing the alcohol content of an alcoholic beverage (10), said apparatus comprising:
- a primary circuit (11) through which the alcoholic beverage (10) circulates,
- a secondary circuit (21) through which an alcohol extracting liquid (20) circulates,
- a pump (110) configured for circulating the alcoholic beverage (10) through the primary circuit (11),
- a pump (210) configured for circulating the alcohol extracting liquid (20) through the secondary circuit (21),
- a filter (30) comprising at least one gas-permeable hydrophobic membrane, the filter (30) being configured so that one of the sides of the membrane is in contact with the alcoholic beverage (10) circulating through the primary circuit (11) and so that the other side of the membrane is in contact with the alcohol extracting liquid (20) circulating through the secondary circuit (21), and
- an extraction and filling circuit (40) configured for guiding the alcoholic beverage (10) from a container (1) to the primary circuit (11) and for guiding said alcoholic beverage (10), once its alcohol content has been reduced, from the primary circuit (11) to the container (1).

2. Apparatus according to claim 1, wherein the extraction and filling circuit (40) comprises an extraction branch (41) configured for providing fluid communication between the container (1) and the primary circuit (11), the extraction branch (41) being communicated with the primary circuit (11) through an inlet valve (63) which is arranged before the pump (110) of the primary circuit (11), said pump (110) being configured for extracting the alcoholic beverage (10) from the container (1) when the inlet valve (63) is in an extraction position, allowing the alcoholic beverage (10) to flow from the container (1) to the primary circuit (11).

3. Apparatus according to claim 2, wherein the extraction and filling circuit (40) comprises a filling branch (42) configured for providing fluid communication between the primary circuit (11) and the container (1), the filling branch (42) being communicated with the primary circuit (11) through an outlet valve (64) which is arranged after the pump (110) of the primary circuit (11), said pump (110) being configured for extracting the alcoholic beverage (10) with a reduced alcohol content from the primary circuit (11) to the container (1) through the filling branch (42) when the outlet valve (64) is in a filling position.

4. Apparatus according to claim 3, wherein the filling branch (42) is in fluid communication with the extraction branch (41) such that the alcoholic beverage (10) with a reduced alcohol content of the primary circuit (11) reaches the container (1) through the extraction branch (41).

5. Apparatus according to claim 4, wherein the inlet valve (63) is a three-way valve, the filling branch (42) being communicated with the extraction branch (41) through said inlet valve (63).

6. Apparatus according to any of the preceding claims, wherein the filter (30) comprises more than one gas-permeable hydrophobic membrane such that one of the sides of the membranes comes into contact with the alcoholic beverage (10) circulating through the primary circuit (11) and the other side of said membranes comes into contact with the alcohol extracting liquid (20) circulating through the secondary circuit (21), where the membranes can be arranged in a series configuration, parallel configuration, or in any combination of series and parallel configurations.

7. Apparatus according to any of the preceding claims, comprising an air pump (71) and air guiding means configured for guiding the air generated by the air pump (71) to the primary circuit (11) during the extraction of the alcoholic beverage (10) with a reduced alcohol content from the primary circuit (11) to the container (1).

8. Apparatus according to any of the preceding claims, comprising guiding means configured for guiding the alcohol extracting liquid (20) from the secondary circuit (21) to the primary circuit (11) once the alcoholic beverage (10) has been extracted from the primary circuit (11) to clean the primary circuit (11).

9. Apparatus according to claim 8, wherein the guiding means comprise a bypass branch (22) in fluid communication with the primary circuit (11) and with the secondary circuit (21).

10. Apparatus according to claim 9, wherein the outlet valve (64) is a three-way valve, the bypass branch (22) being communicated with the primary circuit (11) through said outlet valve (64).

11. Apparatus according to claim 9 or 10, wherein the guiding means comprise a bypass valve (61) providing fluid communication between the secondary circuit (21) and the bypass branch (22).

12. Apparatus according to any of claims 7 to 11, wherein the apparatus comprises a drain chamber (90) for draining alcohol extracting liquid (20) from the primary circuit (11).

13. Apparatus according to any of the preceding claims, comprising a head (80) in fluid communication with the extraction and filling circuit (40) configured for being coupled to the container (1), said head (80) comprising at least one needle (81) configured for providing fluid communication between the container (1) and the extraction and filling circuit (40).

14. Apparatus according to claim 13, wherein the head (80) comprises at least a second needle (82) configured for providing fluid communication between the container (1) and the air outside the container (1) to allow the entry or exit of air.

15. Apparatus according to claim 14, wherein the head (80) is configured for sealing the container (1).

16. Apparatus according to claim 14 or 15, wherein the second needle (82) is in fluid communication with the air outside the container (1) through at least one non-return valve (83).

17. Apparatus according to any of claims 14 to 16, wherein the second needle (82) is in fluid communication with the air outside the container (1) through at least one exhaust valve (84).

18. Apparatus according to any of claims 14 to 17, wherein the second needle (82) is in fluid communication with the air outside the container (1) through at least one pressure relief valve (85).

19. Apparatus according to any of claims 13 to 18, wherein the head (80) comprises a sulfite extraction filter (86).

20. Apparatus according to any of the preceding claims, wherein the apparatus comprises means (50) configured for gradually tilting the container (1) from an initial vertical position to a maximum tilt position greater than 90°, preferably about 170°.

21. Apparatus according to claim 20, wherein the means (50) configured for tilting the container (1) are also configured for gradually straightening the container (1) up until it recovers its initial vertical position.

22. Apparatus according to any of the preceding claims, comprising a chamber (120) which the primary circuit (11) goes through, with said chamber (120) being configured for temporarily housing the alcoholic beverage (10) circulating through the primary circuit (11).

23. Apparatus according to claim 22, wherein the chamber (120) is in fluid communication with the air outside the chamber (120) by means of at least one exhaust valve (121).

24. Apparatus according to claim 22 or 23, wherein the chamber (120) is in fluid communication with the air outside the chamber (120) by means of at least one pressure relief valve (122).

25. Apparatus according to any of the preceding claims, comprising a chamber (220) which the secondary circuit (21) goes through, with said chamber (220) being configured for temporarily housing the alcohol extracting liquid (20) circulating through the secondary circuit (21).

26. Apparatus according to any of the preceding claims, wherein the apparatus comprises a plurality of primary circuits (11) and a plurality of filters (30), with each filter (30) being associated with one of the primary circuits (11).

27. Apparatus according to claim 26, comprising a plurality of secondary circuits (21), with each secondary circuit (21) being associated with one of the filters (30).

28. Apparatus according to any of the preceding claims, wherein the apparatus is portable.

29. Method for reducing the alcohol content of an alcoholic beverage (10) comprising a step of extracting alcohol from the alcoholic beverage (10) by recirculating the alcoholic beverage (10) in a primary circuit (11) and recirculating an alcohol extracting liquid (20) in a secondary circuit (21), bringing one side of a gas-permeable hydrophobic membrane into contact with the alcoholic beverage (10) and the other side of the membrane into contact with the alcohol extracting liquid (20), wherein
- before the step of extracting alcohol, the method comprises a step of extracting the alcoholic beverage (10) from a container (1) through an extraction and filling circuit (40) in fluid communication with the primary circuit (11), in which the alcoholic beverage (10) is extracted from the container (1) and introduced into the primary circuit (11), and
- after the step of extracting alcohol, the method comprises a step of filling the container (1), in which the alcoholic beverage (10) with a reduced alcohol content is extracted from the primary circuit (11) and introduced into the container (1) through the extraction and filling circuit (40).

30. Method according to claim 29, wherein in the step of filling the container (1), the alcoholic beverage (10) is extracted from the primary circuit (11) by means of pressurized air.

31. Method according to claim 29 or 30, further comprising a step of tilting the container (1) before the step of extracting the alcoholic beverage (10) from the container (1), wherein the container (1) is gradually tilted from an initial vertical position to a maximum tilt position greater than 90°, preferably about 170°.

32. Method according to claim 31, further comprising a step of straightening the container (1) up during the step of filling the container (1), wherein the container (1) is gradually straightened up until it recovers its initial vertical position.

33. Method according to any of claims 29 to 32, further comprising a step of introducing volatile elements into the alcohol extracting liquid (20) before the step of extracting alcohol from the alcoholic beverage (10).

34. Method according to any of claims 29 to 33, further comprising a step of extracting sulfites during the step of extracting the alcoholic beverage (10) from the container (1) and/or during the step of filling the container (1).

35. Method according to any of claims 29 to 34, comprising a step of cleaning the primary circuit (11) before the step of extracting the alcoholic beverage (10) from the container (1) or after the step of filling the container (1) by recirculating a cleaning liquid in the primary circuit (11).

36. Method according to claim 35, wherein the cleaning liquid is the alcohol extracting liquid (20) of the secondary circuit (21).

37. Method according to claim 35 or 36, wherein after the step of cleaning, the cleaning liquid is extracted from the primary circuit (11) into a drain chamber (90) by gravity and/or by means of a pump (110) and/or by means of pressurized air.

38. Method according to any of claims 35 to 37, comprising a step of drying the membranes by means of hot air after the step of cleaning the primary circuit (11).

39. Method according to any of claims 29 to 38, further comprising a step of connecting a head (80) to the container (1) before the step of tilting the container (1), the head (80) being in fluid connection with the extraction and filling circuit (40) and with the air outside the container (1).

40. Method according to any of claims 29 to 39, wherein in the step of extracting alcohol from the alcoholic beverage (10), the flow rate of the alcoholic beverage (10) is between 1.2 I/min and 3.8 I/min in the primary circuit (11).

41. Method according to any of claims 29 to 40, wherein the amount of alcohol extracting liquid (20) is between 0.5 and 3 times the amount of alcoholic beverage (10), preferably twice that amount.
